# EUROPEAN PATENT APPLICATION

(11) **EP 2 493 223 A1**
(43) Date of publication of application: **29.08.2012**
(21) Application number: 10824407.0
(22) Date of filing: 20.07.2010
(51) Int. Cl.: H04W 8/00

(54) **METHOD AND DEVICE FOR PROCESSING DYNAMIC SYSTEM INFORMATION BLOCK**

(30) Priority: 23.10.2009 CN 200910207583
(71) Applicant: ZTE Corporation, Shenzhen, Guangdong 518057 (CN)
(72) Inventor: SHEN, Rongrong, Guangdong 518057 (CN); LIU, Dan, Guangdong 518057 (CN)
(74) Representative: Patarin, Stephanie
(86) International application number: PCT/CN2010/075317
(87) International publication number: WO 2011/047566

(57) **Abstract**

The disclosure discloses a method and a device for processing a dynamic System Information Block (SIB). The method includes: after receiving the dynamic SIB (S102), a user terminal saves the dynamic SIB locally and turns on a validity timer of the dynamic SIB if the dynamic SIB is not saved locally (S104); and if a dynamic SIB that is the same as the received dynamic SIB is saved locally, the user terminal deletes the locally-saved dynamic SIB, turns off the validity timer of the previous locally-saved dynamic SIB (S106), saves the received dynamic SIB locally and turns on the validity timer of the locally-saved received dynamic SIB (S108).By the solution, the power consumption of the UE is reduced. S102: The terminal receives the dynamic System Information Block (SIB)
S104: If the dynamic SIB is not saved locally, the terminal saves the dynamic SIB locally and turns on the validity timer of the dynamic SIB
S106: If a dynamic SIB that is the same as the received dynamic SIB is saved locally, the terminal deletes the locally-saved dynamic SIB, and turns off the validity timer of the previous locally-saved dynamic SIB
S108: The terminal saves the received dynamic SIB locally, and turns on the validity timer of the locally-saved received dynamic SIB again

## Description

### Field of the Invention

The disclosure relates to the communication field, in particular to a method and a device for processing a dynamic System Information Block (SIB).

### Background of the Invention

Before accessing a network, a User Equipment (UE) acquires the system information broadcast by the network at first, in order to know the configuration of the network and start a service in a proper way.

The system information is broadcast to all the UEs within a cell by the Radio Resource Control (RRC) in a Universal Mobile Telecommunications System (UMTS) Terrestrial Radio Access Network (UTRAN), in order to notify the UE of the public information of an access layer and a non-access layer of the network.

The SIB is divided into three types according to its logic function: Master Information Block (MIB), Scheduling Block (SB) and SIB, which are organized in a tree structure, wherein the MIB is used for carrying the scheduling information of a certain number of SIBs or SBs (not more than 2 SBs), the SB is used for carrying the scheduling information of other SIBs, and the SIB is used for carrying the actual system information. The scheduling information of the SIB is carried by the MIB or SB; when the scheduling resource of the MIB is insufficient, the SIB is scheduled by the SB; besides, the scheduling information can only be saved in the MIB and SB.

Different SIBs have different features, such as, repetition period, valid area, and validity in a state. The SIB of a certain type is composed of system Information Elements (IE) of the similar nature. Different SIBs are used to carry IEs containing dynamic parameters (i.e., frequently changed system parameters) and IEs containing static parameters (i.e., rarely changed or unchanged system parameters), respectively. The SIB containing the static parameters takes a value tag as the identifier. The value tag is a part of the scheduling information, and is contained in the MIB or SB. The UE compares the value tag of an SIB of a certain type with that of the same type read last time, and if the value is changed, the UE will re-read the SIB. Since a Broadcast Channel (BCH) is mapped on a Primary Common Control Physical Channel (P-CCPCH), which belongs to a physical channel, the UE in the cell can know whether the system information needs to be updated (or saved) by reading the contents of the MIB, therefore, for the SIB containing the static parameter, the UE can know whether the SIB is updated by monitoring the MIB.

The validity of the SIBs (SIB7, SIB14 and SIB17) containing the dynamic parameter is controlled according to the expiration of a timer, and when the timer expires, the system information is invalid and needs to be received again. The duration of the timer of the SIB is stipulated in the 25.331 protocol in the 3rd Generation Partnership Project (3GPP), generally from a few hundred milliseconds to dozens of seconds. The dynamic SIB is frequently changed, so that many resources will be consumed if the SIB is re-read every time it expires.

There is still no effective solution to solve the problems that the UE requires reading the SIB in the BCH transmission channel more frequently and many UE resources are consumed as the SIB containing the dynamic parameter is frequently changed in the related arts.

### Summary of the Invention

The disclosure aims to solve the problems that the UE requires reading the SIB in the BCH transmission channel more frequently and many UE resources are consumed as the dynamic SIB is frequently changed, therefore, the main objective of the disclosure is to provide a solution for processing the dynamic SIB, to solve at least one of the problems.

To achieve the objective, on one aspect, the disclosure provides a method for processing a dynamic SIB.

The method for processing a dynamic SIB according to the disclosure includes: after a terminal receives a second dynamic SIB, if a first dynamic SIB that is the same as the second dynamic SIB is not saved locally, by the terminal, saving the second dynamic SIB locally and turning on a validity timer of the second dynamic SIB; and if a first dynamic SIB that is the same as the received second dynamic SIB is saved locally, by the terminal, deleting the locally-saved first dynamic SIB, turning off a validity timer of the locally-saved first dynamic SIB, saving the received second dynamic SIB locally and turning on a validity timer of the received and locally-saved second dynamic SIB.

To achieve the objective, on another aspect, the disclosure provides a device for processing the dynamic SIB.

The device for processing the dynamic SIB according to the disclosure includes: a compare module, which is configured to compare whether a locally-saved first dynamic SIB is the same as a received second dynamic SIB after a terminal receives the second dynamic SIB; a save module which is configured to save the received second dynamic SIB locally; a delete module which is configured to delete the locally-saved first dynamic SIB when the compare module determines that the locally-saved first dynamic SIB is the same as the received second dynamic SIB; and a timer control module which is configured to turn on a validity timer of the received and locally-saved second dynamic SIB when the compare module determines that the received second dynamic SIB is not saved locally, or to turn off a validity timer of the previous locally-saved first dynamic SIB and turn on a validity timer of the received and locally-saved second dynamic SIB when the compare module determines that the first dynamic SIB that is the same as the received second dynamic SIB is saved locally.

By the technical solution of the disclosure, after receiving the dynamic SIB, the terminal saves the dynamic SIB locally and turns on the validity timer of the dynamic SIB if the dynamic SIB is not saved locally; and if the dynamic SIB same as the received dynamic SIB is saved locally, the terminal deletes the locally-saved dynamic SIB, turns off the validity timer of the previous locally-saved dynamic SIB, saves the received dynamic SIB locally and turns on the validity timer of the locally-saved received dynamic SIB, by doing so, the updating times of the dynamic SIB, the overhead of frequently reading the BCH transmission channel by the UE, and the power consumption of the UE are reduced.

### Brief Description of the Drawings

The drawings herein are used for the further understanding of the disclosure and one part of the application, and the schematic embodiments of the disclosure and description thereof are used for the explanation of the disclosure and not limiting the disclosure. In the drawings:
Fig. 1 is a flowchart of a method for processing a dynamic SIB according to one embodiment of the disclosure;
Fig. 2 is a flowchart of receiving and updating a dynamic SIB according to one embodiment of the disclosure;
Fig. 3 is a block diagram showing the structure of a device for processing a dynamic SIB according to one embodiment of the disclosure; and
Fig. 4 is a block diagram showing the preferred structure of a device for processing a dynamic SIB according to one embodiment of the disclosure.

### Detailed Description of the Embodiments

It should be noted that, if not conflicted, the embodiments and features thereof in the application can be combined with one another. The disclosure will be explained below with reference to the drawings and in conjunction with the embodiments in detail.

In the following embodiments, the steps shown in the flowchart of the drawings can be executed, for example, in the computer system of a set of computer executable instructions, in addition, a logic order is shown in the flowchart, but the steps shown or described here can be executed in a different order under some circumstances.

The following embodiments can be applied to but not limited to the Time Division-Synchronous Code Division Multiple Access (TD-SCDMA) system and the Wideband Code Division Multiple Access (WCDMA) system.

### First embodiment

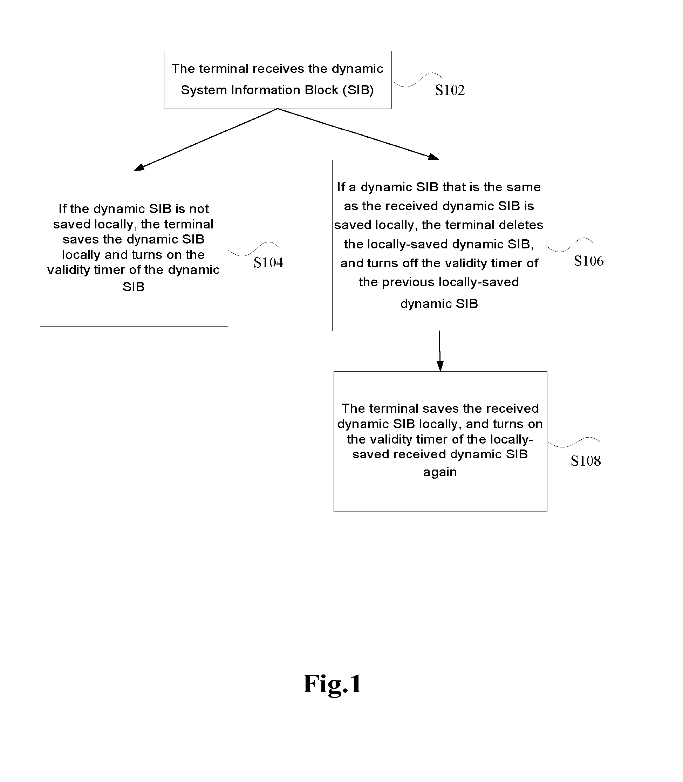

To solve the problems that a UE requires reading the SIB in the BCH transmission channel more frequently and many UE resources are consumed as a dynamic SIB is frequently changed in the related arts, the embodiment provides a method for processing a dynamic SIB. Fig. 1 is a flowchart of the method for processing a dynamic SIB according to one embodiment of the disclosure, as shown in Fig. 1, the method includes S102 to S108:
S102: The terminal receives a dynamic SIB. If a dynamic SIB that is the same as the received dynamic SIB is not saved locally, S104 is executed; otherwise, S106 to S108 are executed.
S104: If a dynamic SIB that is the same as the received dynamic SIB is not saved locally, the terminal saves the dynamic SIB locally and turns on the validity timer of the dynamic SIB.
S106: If a dynamic SIB that is the same as the received dynamic SIB is saved locally, the terminal deletes the locally-saved dynamic SIB, and turns off the validity timer of the previous locally-saved dynamic SIB.
S108: The received dynamic SIB is saved locally, and the validity timer of the locally-saved received dynamic SIB is turned on.

By the abovementioned steps, according to the feature of frequent change of the dynamic system information, an overwriting reception method and concentrated updating way for the dynamic SIB are adopted to reduce the number of updating times of the dynamic SIB, so as to reduce the overhead for frequently reading the BCH transmission channel by the UE as well as the power consumption of the UE.

Preferably, if the terminal fails to acquire the contents of a dynamic SIB locally, it needs to receive the dynamic SIB again.

Preferably, after the validity timer of the dynamic SIB saved locally by the terminal expires, the terminal deletes the dynamic SIB whose validity timer expires, and sets the value of the re-receive tag of the dynamic SIB whose validity timer expires to be valid, wherein the valid value of the re-receive tag indicates that the dynamic SIB has become invalid, and the terminal needs to receive the dynamic SIB whose validity timer expires again; and when saving the dynamic SIB locally, the terminal sets the value of the re-receive tag of the dynamic SIB to be invalid, wherein the invalid value of the re-receive tag indicates that the validity timer of the dynamic SIB does not expire and the dynamic SIB is valid.

Preferably, after receiving the dynamic SIB, the terminal saves the received dynamic SIB locally and turns on the validity timer of the locally-saved received dynamic SIB if the value of the locally-saved re-receive tag of the received dynamic SIB is valid, and the terminal deletes the locally-saved dynamic SIB, turns off the validity timer of the previous locally-saved dynamic SIB, saves the received dynamic SIB whose value of the re-receive tag is invalid locally, and turns on the validity timer of the locally-saved received dynamic SIB whose value of the re-receive tag is invalid again if the value of the re-receive tag of the dynamic SIB received by the terminal is invalid.

Preferably, when it needs to read the broadcast transmission channel, the terminal takes all the dynamic SIBs whose re-received tags are valid in the broadcast transmission channel as the objects that need to be received again. Specifically, the terminal requires reading the broadcast transmission channel under at least one of the following circumstances: the terminal needs to read the contents of one of the locally-saved dynamic SIBs, but the validity timer of the dynamic SIB expires at the moment, the terminal fails to acquire the contents of the locally-saved dynamic SIB, updates the system information of the SIB with a value tag in the serving cell, and periodically tries to receive the SIB not completely received in the serving cell, and the validity timer of the SIB with the value tag in the serving cell expires.

It should be noted that the following embodiments incorporate with the preferred implementation solution in the first embodiment.

### Second embodiment

In the embodiment, when selecting and reselecting a cell, the UE will read the system information of the target cell broadcast on the Broadcast Control Channel (BCCH) which belongs to a logic channel at first, and determine whether to reside in the cell by evaluating the system information. If the target cell is suitable, the UE will reside in the cell and the cell is the serving cell of the UE.

In the whole process of receiving the system information of a cell, the valid time of the dynamic SIB is related to the broadcast repetition period of the SIB (SIB_REP) in the scheduling information, therefore, the dynamic SIB is not received before the reception of the scheduling information; if the scheduling information of the dynamic SIB has been received, the reception of the dynamic SIB is started, after the SIB is received, the dynamic SIB turns on a validity timer, wherein the duration of the timer is stipulated in the 3GPP 25.331. If the received dynamic SIB is the same as the previously received dynamic SIB, the previously received dynamic SIB is overwritten, the previous timer is turned off, and a new validity timer is turned on again, therefore, the valid time of the dynamic SIB is prolonged. If the validity timer of the dynamic SIB expires, the timed-out dynamic SIB becomes invalid, the contents of the dynamic SIB are deleted, and the value of the re-receive tag of the dynamic SIB is set to be valid. When needing the contents of the dynamic SIB, the UE receives the dynamic SIB again if failing to acquire the contents of the dynamic SIB.

After residing in the serving cell, the UE receives the dynamic SIB if finding that the re-receive tag of the dynamic SIB is valid every time receiving the system information by the BCH transmission channel, and saves the received dynamic SIB locally and turns on a validity timer. For example, when updating the system information of the SIB with a value tag in its serving cell, the UE also updates the dynamic SIB whose tag needing to be received is valid.

Particularly, the protocol requires that, the SIB7 timeout in the Frequency Division Duplex (FDD) way in the CELL_FACH state (which refers to the state in which the UE completes the transmission of a small amount of data and transmits messages on the public channel without allocating a dedicated channel) and the SIB14 timeout in the Time Division Duplex (TDD) way in the CELL_FACH or CELL_DCH state (which refers to the state in which the UE communicates by the dedicated channel) need immediate update.

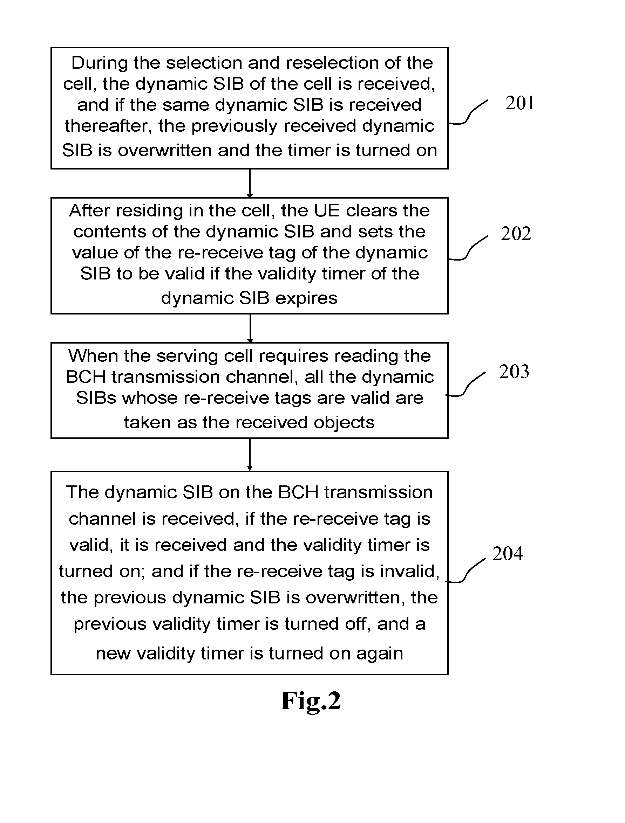

Fig. 2 is a flowchart of receiving and updating a dynamic SIB according to one embodiment of the disclosure, as shown in Fig. 2, the flow includes the following steps:
S201: During the selection and reselection of the cell, the dynamic SIB of the cell is received, and if the same dynamic SIB is received thereafter, the previously received dynamic SIB is overwritten and the timer is turned on.

During the selection and reselection of the cell and the period of time when the UE receives system information on the BCH transmission channel, resides in the cell, and stops receiving the system information, the UE may receive the same dynamic SIB for many times. If receiving a dynamic SIB for the first time, the UE will save it and then turn on a validity timer; and if receiving the same dynamic SIB again thereafter, the UE will clear the previous dynamic SIB, save the new dynamic SIB, turn off the previous validity timer and turn on a new validity timer. It should be noted that the terminal sets the value of the re-receive tag of the dynamic SIB to be invalid when saving the dynamic SIB locally, wherein the invalid value of the re-receive tag indicates that the validity timer of the dynamic SIB does not expire and the dynamic SIB is valid.

For example, the dynamic SIB received by the UE is saved under two situations: first, the UE directly saves the dynamic SIB and turns on the validity timer when no dynamic SIB is in the UE (i.e., the dynamic SIB has become invalid or never been received); and second, the UE deletes the previous dynamic SIB and turns off its validity timer, and then saves the new dynamic SIB and turns on the validity timer when the dynamic SIB is in the UE (i.e., the UE has received the dynamic SIB and the dynamic SIB is valid).

S202: After residing in the cell, the UE clears the contents of the dynamic SIB and sets the value of the re-receive tag of the dynamic SIB to be valid if the validity timer of the dynamic SIB expires.

The UE sets an auxiliary variable of the re-receive tag for each dynamic SIB, i.e., each dynamic SIB has a corresponding re-received tag, which functions as follows: when the UE requires reading the BCH transmission channel, and the re-receive tag of the dynamic SIB is valid, it means that the dynamic SIB has become invalid and the UE needs to receive the dynamic SIB again.

S203: When the serving cell requires reading the BCH transmission channel, all the dynamic SIBs whose re-received tags are valid are taken as the received objects.

When the UE needs a dynamic SIB but the validity timer of the dynamic SIB expires, the UE will require reading the dynamic SIB on the BCH transmission channel. Besides such circumstance, the UE will also require reading the BCH transmission channel when the terminal fails to acquire the contents of the locally-saved dynamic SIB, updates the system information of the SIB with the value tag in the serving cell, and periodically tries to receive the SIB not completely received in the serving cell, and the validity timer of the SIB with the value tag expires. When it requires reading the BCH transmission channel, the UE will take all the dynamic SIBs whose values of the re-received tags are valid as the SIBs that need to be received and transmit them to the physical layer.

Furthermore, when it requires reading the BCH transmission channel, besides the required SIB, the UE can also require reading all the dynamic SIBs (including the valid dynamic SIB, i.e., the dynamic SIB whose validity timer does not expire), and the UE cannot release the BCH transmission channel until all the dynamic SIBs whose values of the re-received tags are valid are completely received. If the dynamic SIB whose value of the re-receive tag is invalid is received, the locally-saved dynamic SIB is overwritten, the previous validity timer is turned off, and a new validity timer of the dynamic SIB is turned on; otherwise, the UE directly releases the BCH transmission channel when determining whether to release the BCH transmission channel.

S204: The dynamic SIB on the BCH transmission channel is received, if the re-receive tag is valid, it is received and the validity timer is turned on; and if the re-receive tag is invalid, the previous dynamic SIB is overwritten, the previous validity timer is turned off, and a new validity timer is turned on again.

During the reception of the system information of the BCH transmission channel, if the dynamic SIB which has been saved locally of the UE and whose validity timer does not expire is received, the UE will overwrite the locally-saved dynamic SIB, turn off the previous validity timer and turn on a new validity timer for the dynamic SIB.

It should be noted that the BCH is a transmission channel between the MAC layer and physical layer in the UE, the UE itself can read the BCH transmission channel without interacting with a network, while the physical layer receives the system information by "adjusting frequency". For example, the network broadcast system information is received by people by adjusting a radio to a certain frequency.

### Third embodiment

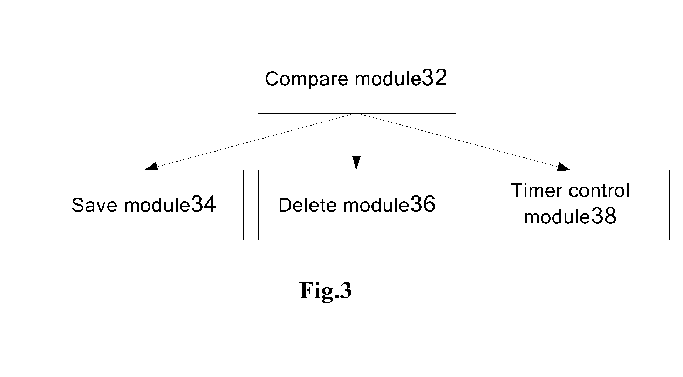

The embodiment of the disclosure provides a device for processing the dynamic SIB, which is used for implementing the first and second embodiments, the description having been mentioned in the above embodiments is not described here any more, and the specific module of the device is described below. Fig. 3 is a block diagram showing the structure of the device for processing the dynamic SIB according to one embodiment of the disclosure; as shown in Fig. 3, the module includes: a compare module 32, a save module 34, a delete module 36, and a timer control module 38, which are described below in detail.

The compare module 32 is used for comparing whether the locally-saved dynamic SIB is the same as the received dynamic SIB after the terminal receives the dynamic SIB, the save module 34 is connected to the compare module 32 and used for saving the received dynamic SIB locally, the delete module 36 is connected to the compare module 32 and used for deleting the locally-saved dynamic SIB when the compare module 32 determines that the dynamic SIB same as the received dynamic SIB is saved locally, and the timer control module 38 is connected to the compare module 32 and used for turning on the validity timer of the locally-saved received dynamic SIB when the compare module 32 determines that the received dynamic SIB is not saved locally, and further for turning off the validity timer of the previous locally-saved dynamic SIB and turning on the validity timer of the locally-saved received dynamic SIB again when the compare module 32 determines that the dynamic SIB same as the received dynamic SIB is saved locally.

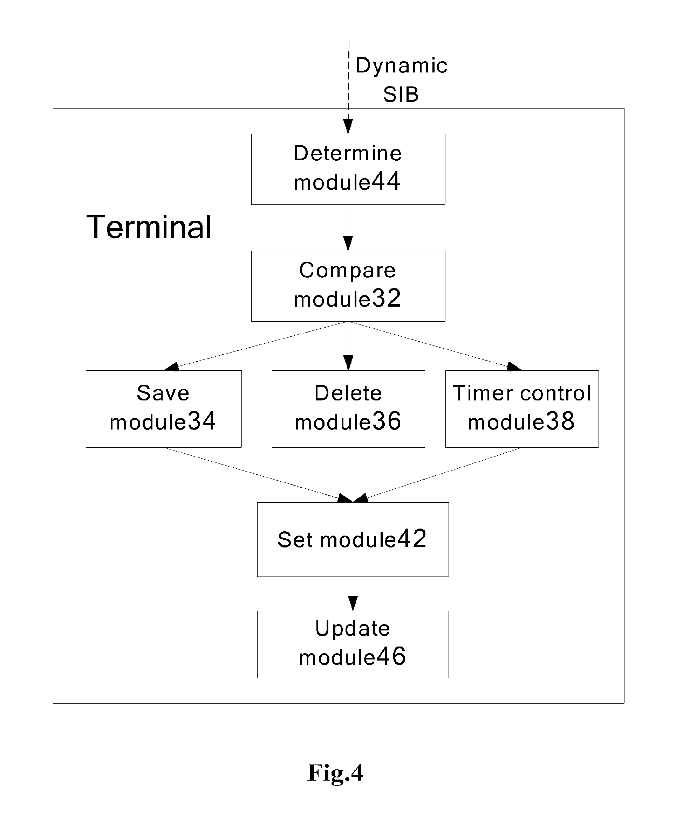

Fig. 4 is a block diagram showing the preferred structure of a device for processing a dynamic SIB according to one embodiment of the disclosure, as shown in Fig. 4, the device further includes: a set module 42, and is described below in detail.

The delete module 36 is further used for deleting the dynamic SIB whose validity timer expires; and the set module 42 is connected to the timer control module 38 and the save module 34 and used for setting the value of the re-receive tag of the dynamic SIB whose validity timer expires to be valid, wherein the valid value of the re-receive tag indicates that the dynamic SIB has become invalid, and the terminal needs to receive the dynamic SIB whose validity timer expires again, and further for setting the value of the re-receive tag of the dynamic SIB to be invalid when the save module 34 saves the dynamic SIB locally, wherein the invalid value of the re-receive tag indicates that the validity timer of the locally-saved dynamic SIB does not expire, and the dynamic SIB is valid.

Preferably, as shown in Fig. 4, the device further includes: a determine module 44 which is connected to the compare module 32 and used for determining whether the value of the locally-saved re-receive tag of the received dynamic SIB is valid after the terminal receives the dynamic SIB; the save module 34 is further used for saving the received dynamic SIB locally when the value of the re-receive tag of the received dynamic SIB is valid; furthermore, the timer control module 38 is further used for turning on the validity timer of the locally-saved received dynamic SIB; the delete module 36 is further used for deleting the locally-saved dynamic SIB when the value of the re-receive tag of the received dynamic SIB is invalid, the timer control module 38 is further used for turning off the validity timer of the previous locally-saved dynamic SIB; the save module 34 is further for saving the received dynamic SIB whose value of the re-receive tag is invalid locally, and the timer control module 38 is further used for turning on the validity timer of the locally-saved received dynamic SIB whose value of the re-receive tag is invalid.

Preferably, as shown in Fig. 4, the device further includes: an update module 46 which is connected to the set module 42 and used for the terminal to take all the dynamic SIBs whose re-received tags are valid in the broadcast transmission channel as the objects that need to be received again when the terminal requires reading the broadcast transmission channel. The terminal requires reading the broadcast transmission channel under at least one of the following circumstances: the terminal needs to read the contents of one of the locally-saved dynamic SIBs, but the validity timer of the dynamic SIB expires, the terminal fails to acquire the contents of the locally-saved dynamic SIB, updates the system information of the SIB with a value tag in the serving cell, and periodically tries to receive the SIB not completely received in the serving cell, and the validity timer of the SIB with the value tag in the serving cell of the terminal expires.

To sum up, by the embodiments, the overhead of the UE resources is reduced, the acquisition of the dynamic SIB can be ensured to make the UE normally communicate with the network.

Obviously, those skilled in the art shall understand that the modules or steps of the disclosure may be implemented by general computing devices and centralized in a single computing device or allocated in a network consisting of multiple computing devices. Optionally, the modules or steps may be implemented by program codes executable by the computing devices, so that they may be saved in a storage device and executed by the computing device, or respectively made into integrated circuit modules or a single integrated circuit module. By doing so, the disclosure is not limited to any specific combination of hardware and software.

The above are only preferred embodiments of the disclosure and not used for limiting the disclosure. For those skilled in the art, the disclosure may have various modifications and changes. Any modifications, equivalent replacements, improvements and the like within the spirit and principle of the disclosure shall fall within the scope of protection of the disclosure.

## Claims

1. A method for processing dynamic System Information Block (SIB), **characterized by** comprising:
after a terminal receives a second dynamic SIB,
if a first dynamic SIB that is the same as the second dynamic SIB is not saved locally, by the terminal, saving the second dynamic SIB locally and turning on a validity timer of the second dynamic SIB; and
if a first dynamic SIB that is the same as the received second dynamic SIB is saved locally, by the terminal, deleting the locally-saved first dynamic SIB, turning off a validity timer of the locally-saved first dynamic SIB, saving the received second dynamic SIB locally and turning on a validity timer of the received and locally-saved second dynamic SIB.

2. The method according to claim 1, **characterized in that** after the validity timer of the second dynamic SIB saved locally at the terminal expires, the method further comprising, by the terminal, deleting the second dynamic SIB whose validity timer expires; and setting value of a re-receive tag of the second dynamic SIB whose validity timer expires to be valid; wherein the valid value of the re-receive tag indicates that the terminal needs to receive a third dynamic SIB for the second dynamic SIB whose validity timer expires.

3. The method according to claim 2, **characterized in that** after the terminal receives the third dynamic SIB, the method further includes:
if the value of the re-receive tag of the received and locally-saved second dynamic SIB is valid, by the terminal, saving the received third dynamic SIB locally, and turning on a validity timer of the received and locally-saved third dynamic SIB.

4. The method according to claim 3, **characterized by** further comprising:
when the terminal saves the third dynamic SIB locally, setting a value of a re-receive tag of the third dynamic SIB to be invalid, wherein the invalid value of the re-receive tag indicates that the validity timer of the third dynamic SIB has not expired; and
if the terminal receives a fourth dynamic SIB for the third dynamic SIB whose value of the re-receive tag is invalid, by the terminal, deleting the locally-saved third dynamic SIB, turning off the validity timer of the previous locally-saved third dynamic SIB, saving the received fourth dynamic SIB locally, and turning on a validity timer of the received and locally-saved fourth dynamic SIB whose value of a re-receive tag is invalid.

5. The method according to claim 2, **characterized in that** when the terminal requires reading a broadcast transmission channel, the terminal takes all of a plurality of dynamic SIBs whose values of re-receive tags are valid as objects that need to be received again.

6. The method according to claim 5, **characterized in that** the terminal requires reading the broadcast transmission channel under at least one of the following circumstances:
the terminal needs to read contents of one of a plurality of locally-saved dynamic SIBs whose validity timers have expired;
the terminal updates system information of a SIB with a value tag in a serving cell;
the terminal periodically tries to receive a SIB not completely received in the serving cell; and
the validity timer of the SIB with the value tag in the serving cell expires.

7. A system for processing a dynamic SIB, **characterized by** comprising:
a compare module, which is configured to compare whether a locally-saved first dynamic SIB is the same as a received second dynamic SIB after a terminal receives the second dynamic SIB;
a save module which is configured to save the received second dynamic SIB locally;
a delete module which is configured to delete the locally-saved first dynamic SIB when the compare module determines that the locally-saved first dynamic SIB is the same as the received second dynamic SIB ; and
a timer control module which is configured to turn on a validity timer of the received and locally-saved second dynamic SIB when the compare module determines that the received second dynamic SIB is not saved locally, or to turn off a validity timer of the previous locally-saved first dynamic SIB and turn on a validity timer of the received and locally-saved second dynamic SIB when the compare module determines that the first dynamic SIB that is the same as the received second dynamic SIB is saved locally.

8. The device according to claim 7, **characterized in that** the delete module is further configured to delete a dynamic SIB whose validity timer expires; and the device further comprising:
a set module which is configured to set value of a re-receive tag of the dynamic SIB whose validity timer expires to be valid, wherein the valid value of the re-receive tag indicates that the terminal needs to receive the dynamic SIB whose validity timer expires again; and the set module is further configured to set value of a re-receive tag of the dynamic SIB to be invalid when the save module saves the dynamic SIB locally, wherein the invalid value of the re-receive tag indicates that the validity timer of the locally-saved dynamic SIB has not expired.

9. The device according to claim 8, **characterized by** further comprising:
a determine module which is configured to judge whether a value of a re-receive tag of a received and locally-saved dynamic SIB is valid after the terminal receives the dynamic SIB;
wherein the save module is further configured to save the received dynamic SIB locally when the value of the re-receive tag of the received dynamic SIB is valid, furthermore, the timer control module is further configured to turn on a validity timer of the locally-saved received dynamic SIB;
the delete module is further configured to delete the locally-saved dynamic SIB when the value of the re-receive tag of the received dynamic SIB is invalid, the timer control module is further configured to turn off the validity timer of the previous locally-saved dynamic SIB; the save module is further configured to save the received dynamic SIB whose value of the re-receive tag is invalid locally, and the timer control module is further configured to turn on the validity timer of the locally-saved received dynamic SIB whose value of the re-receive tag is invalid.

10. The device according to claim 8, **characterized by** further comprising:
an update module which is configured for the terminal to take all of a plurality of dynamic SIBs whose re-received tags are valid in a broadcast transmission channel as objects that need to be received again when the terminal requires reading the broadcast transmission channel.
